# EUROPEAN PATENT SPECIFICATION

(11) **EP 0 831 078 B1**
(45) Date of publication and mention of the grant of the patent: **13.02.2002**
(21) Application number: 97307203.6
(22) Date of filing: 17.09.1997
(51) Int. Cl.: C05F 17/02, C05F 9/02, C05F 17/00, F16K 11/085

(54) **Composting apparatus**
Vorrichtung zur Kompostierung
Appareil à composter

(30) Priority: 18.09.1996 GB 9619460
(43) Date of publication of application: 25.03.1998
(73) Proprietor: Alpheco Limited, Ipswich IP8 3ET (GB)
(72) Inventor: Winship, Neil, Copdock, Ipswich IP8 3ET (GB); Van Den Bergh, Malcom, c/o West Engineering, Ipswich IP3 9QQ (GB)
(74) Representative: Gemmell, Peter Alan, Dr.

(56) References cited:
- EP-A- 0 064 296
- EP-A- 0 444 334
- WO-A-93/23350
- WO-A-93/23351
- WO-A-95/13254

## Description

The present invention relates to composting apparatus, notably to containerised composting apparatus having a novel aeration system.

Composting of organic wastes is becoming an increasingly important activity because of the increasing costs of using landfill sites, and a world-wide drive towards the recovery of natural resources.

For the commercial composting of organic wastes it is known to use a containerised system wherein a transportable container is filled with organic wastes and composted under controlled conditions. The container is mounted on a hook loader sub-frame and connected to an aeration unit which blows air through the composting waste to promote aerobic digestion by controlling the temperatures and moisture levels at which composting takes place. When the composting process is judged sufficiently complete in the container, the aeration unit is disconnected and the container is moved by a Roll On/Roll Off (hook loader) truck or trailer to a location where its contents are to be unloaded and used. The empty container is then returned to be refilled with a fresh batch of organic wastes. Several containers may be grouped together to match the waste flow, and to facilitate filling and maintenance of the containers.

Composting devices have been proposed in International Patent Application WO 93/23351 and in International Patent Application WO 95/13254. These devices have several separate composting containers and one central ventilation unit comprising an air conditioning device, a main fan, and a control valve. Air is circulated by the central ventilation unit and each container is provided with a number of valves and pipes, a fresh air intake, and a fan, for controlling air flow above, around or through the reactor. This arrangement allows different process parameters to be set in different containers.

A problem with existing containerised composting systems is that a single blower is not suitable for reliably controlling composting in a plurality of containers. It is desirable to be able to achieve this to reduce manufacturing and maintenance costs.

It is an object of the present invention to provide containerised composting apparatus with an improved aeration system.

According to an aspect of the present invention there is provided composting apparatus as specified in claim 1.

The apparatus allows a number of containers to be aerated by means of a single blower, and for the speed of the blower to be automatically controlled so as to maintain a pre-set pressure differential between the supply and exhaust manifolds and promote adequate aeration. Preferably the speed of the blower is under computer control, in response to signals from one or more pressure difference sensors associated with the supply and exhaust manifolds. The use of a single relatively large blower is more economic to install and maintain than a series of small blowers, and allows the use of a single moisture trap/heat exchanger.

The exothermic, aerobic digestion of a good composting mixture (20 to 30 parts available carbon to 1 part nitrogen with 50 to 70% moisture and an adequate supply of oxygen) generates enough heat to raise the mass from ambient through the 25 to 35°C temperature range for mesophilic bacteria and even through the optimum 40 to 55°C temperature range for thermophilic bacteria, up to 70 or 80°C. At those high temperatures the composting process would slow right down. Current thinking recommends about 45°C for maximum aerobic microbial activity and about 55°C for a short period of effective pathogen control and weed seed kill.

The main purpose of the aeration system is the removal of heat from the composting mass. Some researchers have found that heat is evolved as much as 30.6 kJ/kg/hr for an initial wet (67-71% moisture) substrate. For optimum aeration it is preferred that the pressure difference is maintained in the range 0.5 to 2.5 kPa, and particularly 1 to 1.5 kPa (around 4 to 6 inches, standard water gauge). A further aim is to provide such a flow of air and water vapour that the temperatures throughout the composting mass are uniform to within a few degrees. There is also a need to re-supply oxygen for continued microbial digestion of the waste matter.

Because different containers may contain waste material at different stages in the composting process it is preferred that the air flow can be independently controlled in each container. There is some experimental evidence that intermittent aeration with pulse duration and frequency adjusted to the temperature of the composting mass, and with the direction of flow upwards or downwards according to the temperature profile is most energy efficient and therefore cost-effective. One theory is that the periods between pulses may allow the oxygen to diffuse through clumps that might become anaerobic in a continuous flow. It is preferred that each container receive about 11.3 cubic meters (about 400 cubic feet) per minute at 1 to 1.5 kPa pressure (4 to 6 inches water gauge pressure) in the pulses.

At least one of the containers is provided with a valve assembly which is adjustable to provide upward or downward air flow in the container, or to shut off air flow through the container. Preferably all of the containers are provided with this valve assembly. This refinement allows air flow to be individually adjusted in each container so as to maintain optimum composting temperatures in each container. The operation of the valve assembly is preferably controlled by a computer in response to temperature measurements in the upper and lower regions of each container. The computer which controls the valve operation may be the same computer as controls the blower speed. The use of the pressure difference sensor and the valve assembly allows the blower speed to be adjusted to ensure sufficient aeration when required but not to waste energy when most or all valves are closed.

The terms "upward" and 'downward" are used herein for convenience. Air flow could, of course, also be from left to right or *vice versa.* The valve assembly is adjustable to provide reversible air flow through the container or, optionally, to shut off air flow through the container.

The valve assembly preferably comprises a valve housing which has four ducts. These ducts comprise a supply duct connected to the supply manifold, an exhaust duct connected to the exhaust manifold, and an upper and a lower duct, for the channelling of air respectively to the upper and lower regions within the container. The valve housing is provided with a valve member which is movable to three principal positions:
a) a downward aeration position, in which the supply duct is in fluid communication with the upper duct, and the exhaust duct is in fluid communication with the lower duct;
b) an upward ventilation position, in which the supply duct is in fluid communication with the lower duct, and the exhaust duct is in fluid communication with the upper duct; and
c) an off position in which the valve member prevents gas flow through the valve housing.

The openings to the ducts may be of any shape, but it is preferred that the ducts be generally rectangular to allow the use of a valve assembly of minimum overall size in relation to the cross section of the ducts.

The valve assembly, and a container which is provided with the valve assembly, may be manufactured and sold separately. A second aspect of the present invention therefore provides a valve assembly for use with a containerised composting system, as specified in claim 11.

The container is preferably of a type which is suitable to be picked up by a standard hook loader, so that it may readily be transported. In a preferred embodiment the container has an outer casing which can be made substantially air tight so that most or all of the air which passes through the composting material is vented through the exhaust manifold. The container may have an internal perforate floor beneath which is located the lower duct for the valve assembly. The perforations preferably make up around half of the area of the floor area. The preferred size of the perforations may vary, but will typically be in the range 5 to 15 mm diameter.

Because it is desirable to be able to connect or disconnect a single container from a group of containers, without disturbing the composting process in the other containers in the group too much, it is preferred that each valve assembly is mounted on a derrick which may be swung away from the container after disconnection of the assembly from the container.

The invention will now be further described, by way of example, with reference to the following drawing in which:
Figure 1 is a schematic elevation view of containerised composting apparatus in accordance with one embodiment of the present invention;
Figure 2 is a plan view of apparatus in accordance with the present invention;
Figure 3 is an end elevation view of one of the containers of Figure 1;
Figure 4 is a side elevation view of an end of a container from Figure 1, in partial cross section;
Figure 5 is a plan view of an end of a container from Figure 1;
Figure 6 is a front elevational view of a valve assembly associated with a container of Figure 1;
Figure 7 shows a detail of the side elevational view of Figure 4;
Figure 8 is a side elevational view of a valve assembly for use in the present invention; and
Figure 9 is a front elevational view, in partial cross section, of the valve assembly of Figure 8.

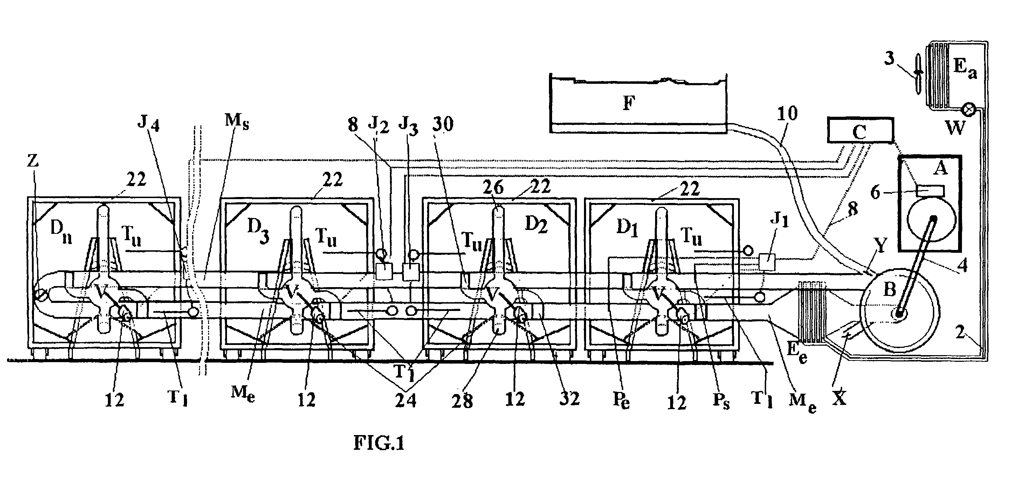

The composting apparatus shown in Figure 1 comprises a plurality of containers D for receiving and processing organic waste. Each container D is connected to a supply manifold Mₛ for supplying air to the container, and to an exhaust manifold Mₑ for the removal of gas from the container. A variable speed blower B blows air into the supply manifold Mₛ. The blower B is driven by a motor A via a drive 4. The speed of the motor A is controlled by a computer C *via* an actuator 6. Any suitable motor A may be used, but for reasons of economy or control it is preferred that the motor A is either diesel powered or a variable frequency electric motor. A pair of tubes Pₛ and Pₑ are connected at one end respectively to the supply Mₛ and exhaust Mₑ manifolds. The tubes are connected at their other ends to a pressure differential sensor mounted in a junction box J. The sensor sends a signal which is proportional to the sensed pressure difference to the computer C via a cable 8, and the computer adjusts the speed of the blower, if necessary, to maintain the pressure differential between the manifolds within pre-set limits.

Gases which pass through the exhaust manifold Mₑ flow through a first heat exchanger Eₑ which takes heat away from the exhaust gases and functions as a moisture trap for condensate from the exhaust gases. Coolant water is pumped by a pump W to the first heat exchanger Eₑ through coolant pipes 2 which are connected to a second heat exchanger Eₐ cooled by a fan 3. The pump W may optionally be used to pump condensate from the moisture trap to spray pipes inside the containers. Some or all of the exhaust gases which have passed through blower B may be recirculated *via* the supply manifold or bled off by a damper Y and duct 10 to a biofilter F, comprising a perforate pipe under about one meter of moist, mature compost. Dampers X and Y are provided to control fresh air intake and exhaust to the biofilter F. The dampers may be manually controlled or operated under computer control. A pressure release valve Z may be provided between the supply and exhaust manifolds in case too high a pressure difference is generated for any reason.

Each container D is provided with a three-way valve assembly V. As shown illustratively for the second container D₂, the valve assembly V is connected to the upper region of the container through an upper port 26, and to the lower region of the container through a lower port 28. The valve assembly V is also connected to the supply manifold Mₛ through a supply port 30, and to the exhaust manifold Mₑ through an exhaust port 32. Operation of a valve member within the valve assembly by an actuator motor 12 selectively allows either the passage of gas upwards or downwards through the container, or prevents the passage of gas through the valve assembly.

Each container D has an upper temperature probe Tᵤ and a lower temperature probe T₁ for measuring the temperature in upper and lower regions of the container respectively. The temperature probes are connected to a junction box J, which transmits temperature information signals to the computer C. Based on the temperature signals the computer C signals the actuator motor 12 to turn the valve member to an appropriate setting for the desired aeration pulse upwards or downwards through the container.

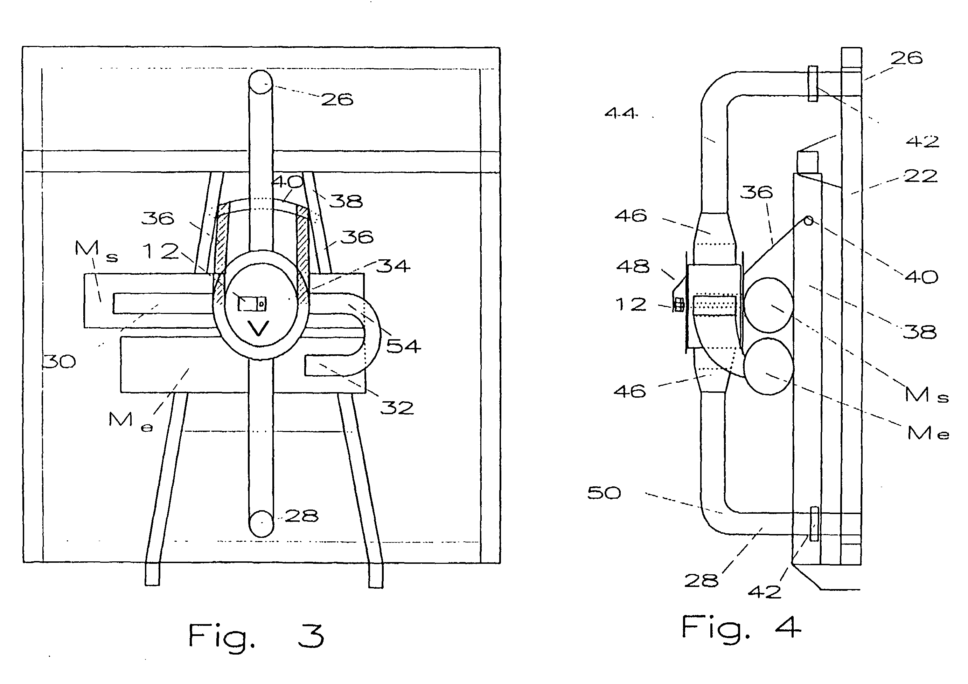

Each container D is built on a CHEM (Container Handling Equipment Manufacturers) standard sub-frame for hook loaders. The containers may be lifted by means of a lifting bar 40 on an A-frame 38 behind the valve assembly V, as best shown in Figure 3. Each container has an outer casing 22 which, when doors and lids are closed, is substantially air tight. Each container has a perforate inner floor 24 on which the composting waste rests, and below which the lower port 28 vents.

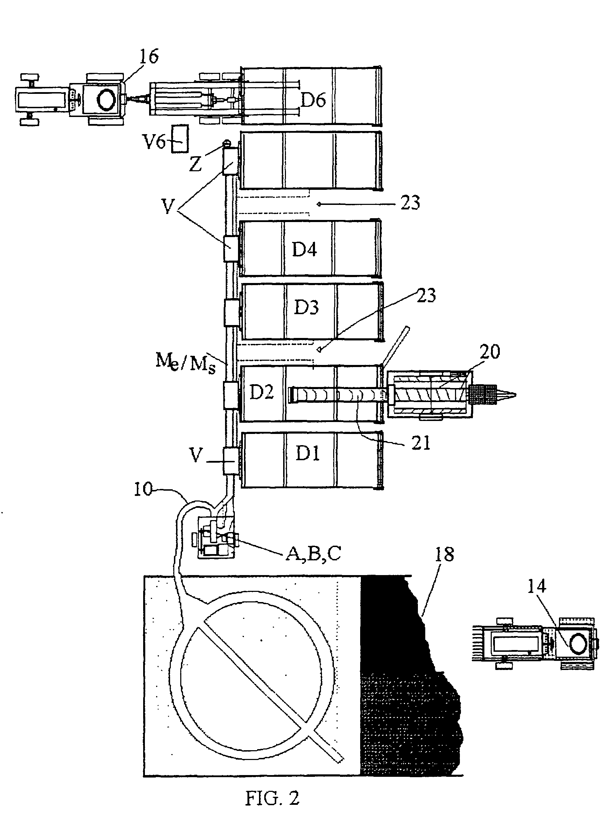

Figure 2 shows the second container D₂ being loaded with organic wastes material by a mixer/loader 20 by means of a conveyor belt 21 with a flinger at the top. The mixer/loader 20 is loaded by a tractor with a 4-in-1 bucket. A tractor and hook loader trailer 16 is shown hooked up to the sixth container D₆, and the associated valve assembly V₆ has been disconnected to allow access to and removal of the sixth container. The ducts between valve assemblies preferably have quick-release, flexible joints to allow easy insertion and removal of valve assemblies. Green waste and putrescibles stores 18 are adjacent to the bio-filter F, for the temporary storage of organic wastes awaiting mixing or masceration before being fed into a container. There are gaps of about one meter between the second and third containers, and between the fourth and fifth containers to accommodate the temperature probes.

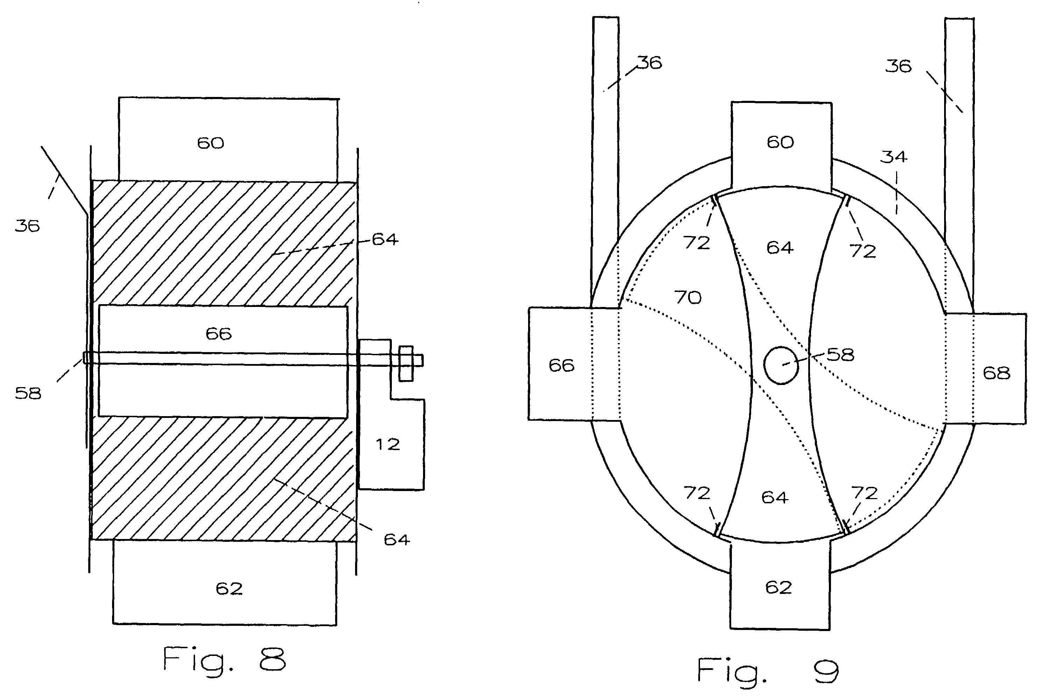

Figures 3 and 4 show in more detail the arrangement of the A-frame 38 and valve assembly V on the end of a container. The valve housing 34 is suspended from the container lifting bar 40 by a pair of straps 36. The exhaust manifold Mₑ is connected to the valve housing 34 by means of a reversing duct 54. A flexible upper connecting tube 44 and a flexible lower connecting tube 50 connect the valve housing 34 respectively with the upper port 26 and the lower port 28 to the container by means of toggle connectors 42. As best shown in Figures 8 and 9 the ducts of the valve assembly are rectangular (for example 100 mm by 200 mm), and these are connected to the tubes 44 and 50 by adapters 46. A rain cover 48 protects the actuator 12 from the weather. Any suitable actuator may be used, for example a Belimo SM-24-S actuator with S1 switch.

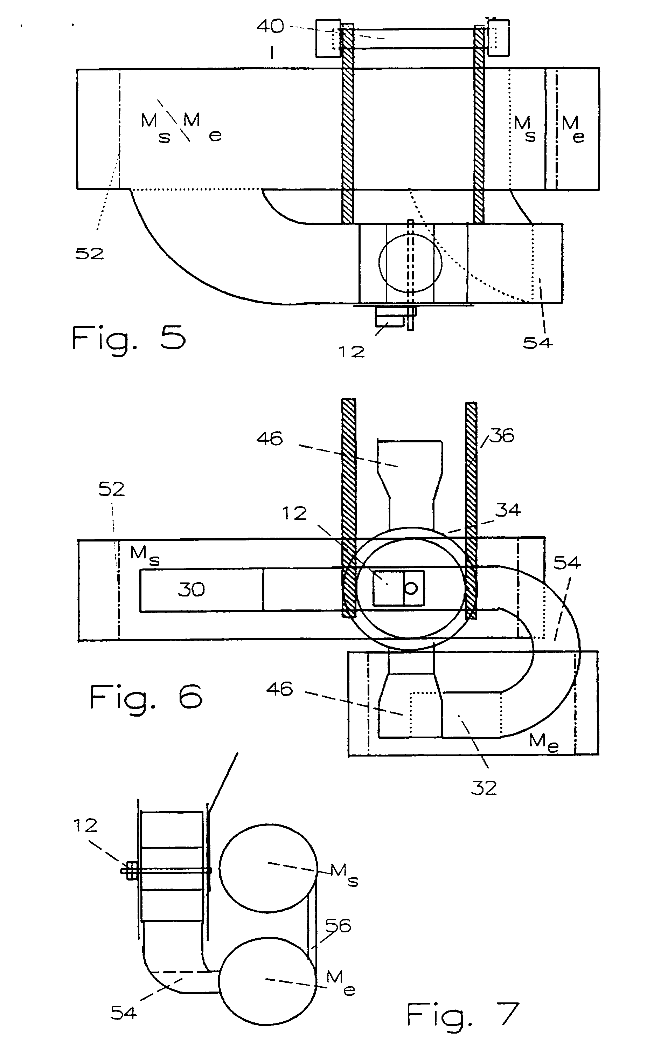

Figures 5 and 6 illustrate the overlap of flexible hoses which connect the manifold components (dotted line 52) and which can be removed to separate the components when a container is removed. The manifolds are held in place by a light weight former 56, as shown in Figure 7.

Referring now to Figures 8 and 9, the waisted valve member 64 is pivotable about a bearing 58 and actuated by an actuator motor 12. In the position shown in Figure 9 the valve member prevents gas flow through the valve housing 34. In the position 70 shown by the dotted line, the valve member 64 directs air from the supply duct 66 through the lower duct 62. Air then passes upwards through the perforate floor and the composting material. Gases leave the container by passing through the upper duct 60 and the exhaust duct 68. Downward air flow would be correspondingly caused by turning the valve member 64 through 90° from the position 70. The valve member is provided with rubber seals 72 where it comes into contact with the valve housing 34, and the corners of the ducts are rounded to enable a closer seal to be made.

## Claims

1. Composting apparatus comprising a plurality of containers (D) for receiving and processing organic waste, each container (D) being connected to a supply manifold (Mₛ) for supplying air to the container (D) and connected to an exhaust manifold (Mₑ) for the removal of gas from the container, the apparatus further comprising a single variable speed blower (B) for blowing air into the supply manifold, means for measuring the difference in pressure between the manifolds, and means (C) for adjusting the speed of the said single blower (B) in response to changes in the detected pressure difference;
wherein at least one of the containers (D) is provided with a valve assembly (V) which is adjustable to provide reversible air flow through that container,
the valve assembly (V) comprising a valve housing (34) which has a supply duct (66) connected to the supply manifold (Mₛ), an upper duct (60) connected to the upper region of a composting container (D), a lower duct (62) connected to the lower region of the container (D), and an exhaust duct (68) connected to the exhaust manifold (Mₑ), the valve housing (34) being provided with a valve member (64) which is movable to three principal positions:
a) a downward aeration position, in which the supply duct (66) is in fluid communication with the upper duct (60), and the exhaust duct (68) is in fluid communication with the lower duct (62);
b) an upward ventilation position, in which the supply duct (66) is in fluid communication with the lower duct (62), and the exhaust duct (68) is in fluid communication with the upper duct (60); and
c) an off position in which the valve member (64) prevents gas flow through the valve housing (34).

2. Composting apparatus as claimed in claim 1, wherein the openings to the ducts are generally rectangular in section.

3. Composting apparatus as claimed in claim 1 or claim 2, wherein the containers (D) have an outer casing (22) which can be made substantially air tight so that most or all of the air which passes through composting material in a container is vented through the exhaust manifold (Mₑ).

4. Composting apparatus as claimed in any one of the preceding claims, wherein each container has an internal perforate floor (24) beneath which is located the lower duct (62) of the valve assembly (V).

5. Composting apparatus as claimed in claim 4, wherein the perforations make up about half of the floor area.

6. Composting apparatus as claimed in claim 4 or claim 5, wherein the perforations have diameters in the range 5 to 15 mm.

7. Composting apparatus as claimed in any one of the preceding claims, wherein means (Tᵤ, Tₗ) are provided for measuring the temperature in at least one region of at least one container and wherein means (C) are provided for controlling operation of the valve assembly (34) in the at least one container (D) so as to maintain the measured region at a preferred temperature.

8. Composting apparatus as claimed in any one of the preceding claims, wherein the speed of the blower (B) and operation of the valve assembly (V) are controlled by a single computer (C).

9. Composting apparatus as claimed in any one of the preceding claims, further including a first heat exchanger (Eₑ) for taking heat away from gases in the exhaust manifold (Mₑ), and a second heat exchanger (Eₐ) arranged to cool the first heat exchanger.

10. Composting apparatus as claimed in claim 8 or claim 9, wherein the first heat exchanger (Eₑ) is provided with a moisture trap, and pump means (W) are provided for pumping condensate from the moisture trap to spray pipes inside the containers.

11. A valve assembly (V) for use with a containerised composting system, comprising a valve housing (34) which has a supply duct (66) for connection to an air supply, an upper duct (60) for connection to the upper region of a composting container, a lower duct (62) for connection to the lower region of the container, and an exhaust duct (68), the valve housing (34) being provided with a valve member (64) which is movable to three principal positions:
a) a downward aeration position, in which the supply duct (66) is in fluid communication with the upper duct (60), and the exhaust duct (68) is in fluid communication with the lower duct (62);
b) an upward ventilation position, in which the supply duct (66) is in fluid communication with the lower duct (62), and the exhaust duct (68) is in fluid communication with the upper duct (60); and
c) an off position in which the valve member (64) prevents gas flow through the valve housing (34).

## Patentansprüche

1. Kompostiervorrichtung, bestehend aus einer Vielzahl von Behältern (D) zum Empfang und zur Verarbeitung von organischem Abfall, wobei jeder Behälter (D) an einen Zufuhrverteiler (Mₛ) angeschlossen ist, um den Behälter (D) mit Luft zu versorgen, und an einen Abluftsammler (Mₑ) angeschlossen ist, um Gas aus dem Behälter zu entfernen, und wobei die Vorrichtung weiterhin besteht aus einem einzelnen Gebläse (B) mit regelbarer Drehzahl, um Luft in den Zufuhrverteiler zu blasen, Mitteln, um das Druckgefälle zwischen dem Verteiler und dem Sammler zu messen, und Mitteln (C), um die Drehzahl des besagten einzelnen Gebläses (B) entsprechend den Veränderungen in dem festgestellten Druckgefälle einzustellen;
wobei mindestens einer der Behälter (D) mit einer Ventilbaugruppe (V) ausgestattet ist, die so einstellbar ist, dass ein umkehrbarer Luftstrom durch diesen Behälter bereitgestellt werden kann, und
die Ventilbaugruppe (V) ein Ventilgehäuse (34) umfasst, welches ein Versorgungsrohr (66), das an den Zufuhrverteiler (Mₛ) angeschlossen ist, ein oberes Rohr (60), das an den oberen Bereich eines Kompostierbehälters (D) angeschlossen ist, ein unteres Rohr (62), das an den unteren Bereich des Behälters (D) angeschlossen ist, ein Abluftrohr (68), das an den Abluftsammler (Mₑ) angeschlossen ist, aufweist, und das Ventilgehäuse (34) mit einem Ventilstab (64) ausgestattet ist, der in drei Hauptpositionen verschoben werden kann:
a) in eine untere Position zur Belüftung, in der das Versorgungsrohr (66) eine Kommunikation des Fluids mit dem oberen Rohr (60) ermöglicht und in der das Abluftrohr (68) eine Kommunikation des Fluids mit dem unteren Rohr (62) ermöglicht;
b) in eine obere Position zur Entlüftung, in der das Versorgungsrohr (66) eine Kommunikation des Fluids mit dem unteren Rohr (62) ermöglicht und in der das Abluftrohr (68) eine Kommunikation des Fluids mit dem oberen Rohr (60) ermöglicht; und
c) in eine Sperrposition, in der der Ventilstab (64) den Gasstrom durch das Ventilgehäuse (34) verhindert.

2. Kompostiervorrichtung nach Anspruch 1, worin die Öffnungen zu den Rohren im Allgemeinen einen rechteckigen Querschnitt haben.

3. Kompostiervorrichtung nach Anspruch 1 oder Anspruch 2, worin die Behälter (D) ein äußeres Gehäuse (22) haben, das im Wesentlichen luftdicht gestaltet werden kann, so dass der größte Teil der Luft oder die gesamte Luft, die durch das Kompostiermaterial in einem Behälter strömt, durch den Abluftsammler (Mₑ) abgeführt wird.

4. Kompostiervorrichtung nach einem der vorherigen Ansprüche, worin jeder Behälter einen inneren gelochten Boden (24) hat, unter dem das untere Rohr (62) der Ventilbaugruppe (V) angeordnet ist.

5. Kompostiervorrichtung nach Anspruch 4, worin die Löcher etwa die Hälfte der Bodenfläche umfassen.

6. Kompostiervorrichtung nach Anspruch 4 oder Anspruch 5, worin die Löcher Durchmesser im Bereich von 5 bis 15 mm haben.

7. Kompostiervorrichtung nach einem der vorherigen Ansprüche, worin Mittel (Tᵤ, Tₗ) bereitgestellt werden, um die Temperatur in mindestens einem Bereich von mindestens einem Behälter zu messen, und worin Mittel (C) bereitgestellt werden, um den Betrieb der Ventilbaugruppe (34) in mindestens einem Behälter (D) zu steuern, so dass in dem gemessenen Bereich eine bevorzugte Temperatur aufrechterhalten wird.

8. Kompostiervorrichtung nach einem der vorherigen Ansprüche, worin die Drehzahl des Gebläses (B) und der Betrieb der Ventilbaugruppe (V) durch einen einzelnen Rechner (C) gesteuert werden.

9. Kompostiervorrichtung nach einem der vorherigen Ansprüche, die weiterhin einen ersten Wärmetauscher (Eₑ) zur Ableitung der Wärme von den Gasen in dem Abluftsammler (Mₑ) und einen zweiten Wärmetauscher (Eₐ), der so angeordnet ist, dass er den ersten Wärmetauscher kühlt, enthält.

10. Kompostiervorrichtung nach Anspruch 8 oder Anspruch 9, worin der erste Wärmetauscher (Eₑ) mit einem Feuchtfänger ausgestattet ist und Pumpenvorrichtungen (W) bereitgestellt werden, um das Kondensat aus dem Feuchtfänger zu den Sprührohren innerhalb der Behälter zu pumpen.

11. Eine Ventilbaugruppe (V) zur Verwendung mit einem, aus Behältern bestehenden Kompostiersystem, das ein Ventilgehäuse (34) umfasst, welches ein Versorgungsrohr (66) für den Anschluss an eine Luftversorgung, ein oberes Rohr (60) für den Anschluss an den oberen Bereich eines Kompostierbehälters, ein unteres Rohr (62) für den Anschluss an den unteren Bereich des Behälters und ein Abluftrohr (68) aufweist, und das Ventilgehäuse (34) mit einem Ventilstab (64) ausgestattet ist, der in drei Hauptpositionen verschoben werden kann:
a) in eine untere Position zur Belüftung, in der das Versorgungsrohr (66) eine Kommunikation des Fluids mit dem oberen Rohr (60) ermöglicht und in der das Abluftrohr (68) eine Kommunikation des Fluids mit dem unteren Rohr (62) ermöglicht;
b) in eine obere Position zur Entlüftung, in der das Versorgungsrohr (66) eine Kommunikation des Fluids mit dem unteren Rohr (62) ermöglicht und in der das Abluftrohr (68) eine Kommunikation des Fluids mit dem oberen Rohr (60) ermöglicht; und
c) in eine Sperrposition, in der der Ventilstab (64) den Gasstrom durch das Ventilgehäuse (34) verhindert.

## Revendications

1. Dispositif de compostage comprenant une pluralité de bacs (D) destinés à recevoir et traiter des déchets organiques, chaque bac (D) étant relié à une tubulure d'alimentation (Mₛ) servant à envoyer de l'air dans le bac (D) et étant relié à une tubulure d'évacuation (Mₑ) pour évacuer des gaz du bac, le dispositif comprenant en outre un unique ventilateur (B) à vitesse variable pour insuffler de l'air dans la tubulure d'alimentation, un moyen pour mesurer la différence de pression entre les tubulures et un moyen (C) pour régler la vitesse dudit ventilateur unique (B) en réponse à des variations de la différence de pression détectée ;
dans lequel au moins un des bacs (D) comporte un système de valve (V) réglable pour réaliser un courant d'air réversible dans ce bac,
le système de valve (V) comportant un corps (34) de valve qui possède un conduit d'alimentation (66) relié à la tubulaire d'alimentation (Mₛ), un conduit supérieur (60) relié à la zone supérieure d'un bac de compostage (D), un conduit inférieur (62) relié à la zone inférieure du bac (D), et un conduit d'évacuation (68) relié à la tubulure d'évacuation (Mₑ), le corps (34) de valve étant pourvu d'un élément formant valve (64) qui peut être mis dans trois positions principales :
a) une position basse d'aération, dans laquelle le conduit d'alimentation (66) est en communication de fluide avec le conduit supérieur (60) et le conduit d'évacuation (68) est en communication de fluide avec le conduit inférieur (62) ;
b) une position haute de ventilation, dans laquelle le conduit d'alimentation (66) est en communication de fluide avec le conduit inférieur (62) et le conduit d'évacuation (68) est en communication de fluide avec le conduit supérieur (60) ; et
c) une position d'arrêt dans laquelle l'élément formant valve (64) empêche le passage de gaz dans le corps (34) de valve.

2. Dispositif de compostage selon la revendication 1, dans lequel les ouvertures débouchant dans les conduits ont une section globalement rectangulaire.

3. Dispositif de compostage selon la revendication 1 ou la revendication 2, dans lequel les bacs (D) comportent une enveloppe extérieure (22) qui peut être rendue sensiblement étanche à l'air de façon que la majeure partie ou la totalité de l'air qui traverse la matière à composter dans un bac est rejetée à l'extérieur via la tubulure d'évacuation (Mₑ).

4. Dispositif de compostage selon l'une quelconque des revendications précédentes, dans lequel chaque bac comporte un fond interne perforé (24) sous lequel se trouve le conduit inférieur (62) du système de valve (V).

5. Dispositif de compostage selon la revendication 4, dans lequel les perforations occupent environ la moitié de la surface du fond.

6. Dispositif de compostage selon la revendication 4 ou la revendication 5, dans lequel les perforations ont un diamètre compris entre 5 et 15 mm.

7. Dispositif de compostage selon l'une quelconque des revendications précédentes, dans lequel des moyens (Tᵤ, Tₗ) sont prévus pour mesurer la température dans au moins une zone d'au moins un bac, et dans lequel des moyens (C) sont prévus pour commander le fonctionnement du système de valve (34) dans ledit bac au moins unique (D) afin de maintenir la zone mesurée à une température voulue.

8. Dispositif de compostage selon l'une quelconque des revendications précédentes, dans lequel la vitesse du ventilateur (B) et le fonctionnement du système de valve (V) sont commandés par un seul ordinateur (C).

9. Dispositif de compostage selon l'une quelconque des revendications précédentes, comportant en outre un premier échangeur (Eₑ) de chaleur pour extraire la chaleur des gaz présents dans la tubulure d'évacuation (Mₑ), et un second échangeur (Eₐ) de chaleur conçu pour refroidir le premier échangeur de chaleur.

10. Dispositif de compostage selon la revendication 8 ou la revendication 9, dans lequel le premier échangeur (Eₑ) de chaleur comporte un piège à humidité, et des moyens formant pompes (W) sont prévus pour pomper le condensat présent dans le piège à humidité afin d'arroser des tuyaux situés à l'intérieur des bacs.

11. Système de valve (V) destiné à être utilisé avec un système de compostage en bacs, comprenant un corps (34) de valve qui possède un conduit d'alimentation (66) destiné à être relié à une source d'alimentation en air, un conduit supérieur (60) destiné à être relié à la zone supérieure d'un bac de compostage, un conduit inférieur (62) destiné à être relié à la zone inférieure du bac, et un conduit d'évacuation (68), le corps (34) de valve étant muni d'un élément formant valve (64) qui peut être mis dans trois positions principales :
a) une position basse d'aération, dans laquelle le conduit d'alimentation (66) est en communication de fluide avec le conduit supérieur (60), et le conduit d'évacuation (68) est en communication de fluide avec le conduit inférieur (62) ;
b) une position haute de ventilation, dans laquelle le conduit d'alimentation (66) est en communication de fluide avec le conduit inférieur (62) et le conduit d'évacuation (68) est en communication de fluide avec le conduit supérieur (60); et
c) une position d'arrêt dans laquelle l'élément formant valve (64) empêche le passage de gaz dans le corps (34) de valve.
